# EUROPÄISCHE PATENTANMELDUNG

(11) **EP 4 201 859 A1**
(43) Veröffentlichungstag der Anmeldung: **28.06.2023**
(21) Anmeldenummer: 21217351.2
(22) Anmeldetag: 23.12.2021
(51) Int. Cl.: B66B 1/34

(54) **KOMMUNIKATIONSSYSTEM FÜR AUFZÜGE**

(71) Anmelder: Cedes AG, 7302 Landquart (CH)
(72) Erfinder: LENDI, Marcial, 8752 Näfels (CH); NADIG, Oliver, 7000 Chur (CH)
(74) Vertreter: Otten, Roth, Dobler & Partner mbB Patentanwälte

(57) **Zusammenfassung**

Das erfindungsgemäße Kommunikationssystem für einen Aufzug weist einen Buskontroller und mehrere Busknoten auf. Der Buskontroller stellt periodisch Anfragen an alle Busknoten und empfängt der Antworten Busknoten. Die Busknoten empfangen Anfragen vom Buskontroller und senden Antworten an den Busknoten. Dabei ist der Buskontroller dazu ausgebildet bei seinen Anfragen jeweils eine Gruppe von Busknoten auszuwählen und die Antworten dieser Busknoten zwischen zwei Anfragen abzuwarten.

## Beschreibung

Die Erfindung betrifft ein Kommunikationssystem für Aufzüge.

Aus dem Stand der Technik sind Kommunikationssystem für Aufzüge bekannt, die entweder technisch sehr aufwändig sind oder für eine Anzahl bestimmter Funktionen im Aufzug zu langsam sind.

Es ist Aufgabe der Erfindung, ein verbessertes Kommunikationssystem bereit zu stellen.

Diese Aufgabe wird, ausgehend von einem Kommunikationssystem eingangs genannter Art, durch einen Kommunikationssystem nach Anspruch 1, einem Aufzug nach Anspruch 7 und einem Buskontroller nach Anspruch 8 gelöst. Vorteilhafte Ausgestaltungen sind in den weiteren abhängigen Ansprüchen angegeben.

Das erfindungsgemäße Kommunikationssystem für einen Aufzug weist einen Buskontroller und mehrere Busknoten auf. Der Buskontroller stellt periodisch Anfragen an alle Busknoten und empfängt die Antworten der Busknoten. Die Busknoten empfangen Anfragen vom Buskontroller und senden Antworten an den Busknoten. Dabei ist der Buskontroller dazu ausgebildet bei seinen Anfragen jeweils eine Gruppe von Busknoten auszuwählen und die Antworten dieser Busknoten zwischen zwei Anfragen abzuwarten.

Gruppe ist ein Teil der Busknoten, sodass mindestens noch eine weitere Gruppe von Busknoten existiert.

Dies kann den Vorteil ausbilden, dass die Frequenz der Antworten erhöht wird.

Der Buskontroller kann ein von der Aufzugsteuerung getrenntes Gerät mit oder ohne eigenem Gehäuse sein. Der Buskontroller kann in die Aufzugsteuerung integriert sein.

Vorzugsweise ist der Buskontroller dazu ausgebildet, bei seinen Anfragen unterschiedliche Gruppe von Busknoten auszuwählen bis alle Busknoten einmal oder mindesten einmal ausgewählt wurden und dieses Vorgehen wiederholt auszuführen.

Dies kann den Vorteil ausbilden, dass unterschiedliche Typen von Gruppen unterschiedliche behandelt werden können. Dies erhöht die Flexibilität des Systems. Dies kann auch den Vorteil ausbilden, dass das System an die unterschiedlichen Dringlichkeiten angepasst werden kann.

Vorzugsweise ist der Buskontroller dazu ausgebildet, verschiedene Gruppen von Busknoten jeweils in verschieden langen Zeitabständen auszuwählen. Insbesondere wählt der Busknoten mindestens eine bestimmte Gruppe in anderem Zeitabstand als andere Gruppen aus. Insbesondere ist dabei der mindestens eine verschiedene Zeitabstand jeweils ein ganzzahliges Vielfaches des kürzesten Zeitabstandes. Insbesondere ist dabei mindestens eine bestimmte Gruppe von Busknoten in halb so langen Zeitabständen ausgewählt als andere Gruppen von Busknoten.

Dies kann den Vorteil ausbilden, dass das System an die unterschiedlichen Dringlichkeiten angepasst werden kann. Dies kann den Vorteil ausbilden, dass die Abfragefrequenz für mindestens eine Gruppe erhöht werden kann ohne die Leistungsfähigkeit der Hardware ändern zu müssen. Dies kann den Vorteil ausbilden, dass in minimaler Zeit alle Gruppen innerhalb eines Wiederholungsintervalls antworten.

Vorzugsweise sind die Busknoten dazu ausgebildet, dass verschiedenen Gruppen von Busknoten verschiedenen Typen von Gruppen von Busknoten entsprechen und/oder, dass verschiedenen Typen von Gruppen von Busknoten verschiedenen Typen von Sensoren der den Busknoten zugehörigen Sensoren entsprechen und/oder, dass die verschiedenen Typen von Gruppen von Busknoten verschiedenen Typen von Sicherheitsklassen oder Dringlichkeitsklassen der den Busknoten zugehörigen Sensoren entsprechen.

Typen von Sensoren können sein: Kabinentür-Sensoren, Schachttür-Sensoren, Kabinenposition-Sensoren, Nothalt-Schalter, Betriebsmodus-Schalter, Inspektionsfahrt-Schalter, Servicetür-Sensoren, Motorstatus-Sensor, Bremsenstatus-Sensoren.

Unterschiedliche Sicherheitsklasse oder Dringlichkeitsklasse bedeutet die Notwendigkeit unterschiedlich häufiger Abfrage und Antwort der betroffenen Sensoren und deren betroffenen Busknoten. Eine höhere Sicherheitsklasse oder Dringlichkeitsklasse von Sensoren und zugeordneten Buskonten ist zeitkritischer und muss öfters abgefragt werden und muss öfters die Daten übermitteln als eine niedrigere Sicherheitsklasse oder Dringlichkeitsklasse von Sensoren und Busknoten.

Der an einem Busknoten angeschlossene Sensor mit der höchsten Sicherheitsklasse oder Dringlichkeitsklasse definiert die Sicherheitsklasse oder Dringlichkeitsklasse des Busknoten. Im Allgemeinen sind Sensoren gleicher Sicherheitsklasse oder Dringlichkeitsklasse an einem Busknoten angeschlossen.

Die Kabinentür-Sensoren und Schachttür-Sensoren entsprechen einer niedrigeren Sicherheitsklasse oder Dringlichkeitsklasse als die anderen Sensoren. Diese Türsensoren sind typischerweise weniger zeitkritisch. Daher werden die Türsensoren weniger oft abgefragt als die anderen Sensoren. Die Abfrageperiodendauer der Türsensoren ist länger als die Abfragedauer dar anderen Sensoren. Die Abfrageperiodendauer der anderen Sensoren ist kürzer als die Abfragedauer der Türsensoren. Die Türsensoren sind in wesentlich höherer Zahl vorhanden als die anderen Sensoren. Daher können so die anderen Sensoren in kürzeren Intervallen abgefragt werden, als wenn alle Sensoren in gleichen Abständen abgefragt werden würden.

Dies kann den Vorteil ausbilden, dass die Gruppen von Busknoten mit Sicherheitssensoren oder dringlicheren Sensoren häufiger abgefragt werden können als Gruppen von Busknoten mit Sensoren, welche keine Sicherheitssensoren oder dringliche Sensoren sind.

Vorzugsweise sind die Busknoten dazu ausgebildet, nur dann eine Antwort auf die Anfrage des Buskontrollers an den Buskontroller zu senden, wenn der Busknoten in der Gruppe der ausgewählten Busknoten enthalten ist.

Dies kann den Vorteil ausbilden, dass die Kommunikation geordnet und mit minimalem Aufwand abläuft.

Vorzugsweise sind die Busknoten dazu ausgebildet nur dann eine Antwort auf die Anfrage des Buskontrollers an den Buskontroller zu senden, wenn der Busknoten in der Gruppe der ausgewählten Busknoten enthalten ist und nach der Anfrage in bestimmter Reihenfolge zu den ebenfalls in der Gruppe der ausgewählten Busknoten enthaltenen Busknoten seine Antworten an den Buskontroller zu senden.

Dies kann den Vorteil ausbilden, dass die Kommunikation geordnet und mit minimalem Aufwand abläuft.

Der erfindungsgemässe Aufzug ist ein Aufzug mit einem oben beschriebenen Kommunikationssystem.

Der erfindungsgemässe Buskontroller ist ein Buskontroller gemäss dem oben beschriebenen Kommunikationssystem.

Weitere Merkmale der Erfindung sind in den Zeichnungen angegeben.

Die jeweils genannten Vorteile können sich auch für Merkmalskombinationen realisieren in deren Zusammenhang sie nicht genannt sind.

### Überblick über die Zeichnungen:

Ausführungsbeispiele der Erfindung sind in den Zeichnungen dargestellt und werden im Folgenden näher erläutert. Gleiche Bezugszeichen in den einzelnen Figuren bezeichnen dabei einander entsprechende Elemente. Es zeigen:
- Fig. 1: Buskommunikation mit Anfrage und Antworten
- Fig. 2: Buskommunikation mit 3 Gruppen von Busknoten
- Fig. 3: Buskommunikation mit 4 Gruppen von Busknoten
- Fig. 4: Buskommunikation mit 5 Gruppen von Busknoten

### Detaillierte Beschreibung der Zeichnungen:

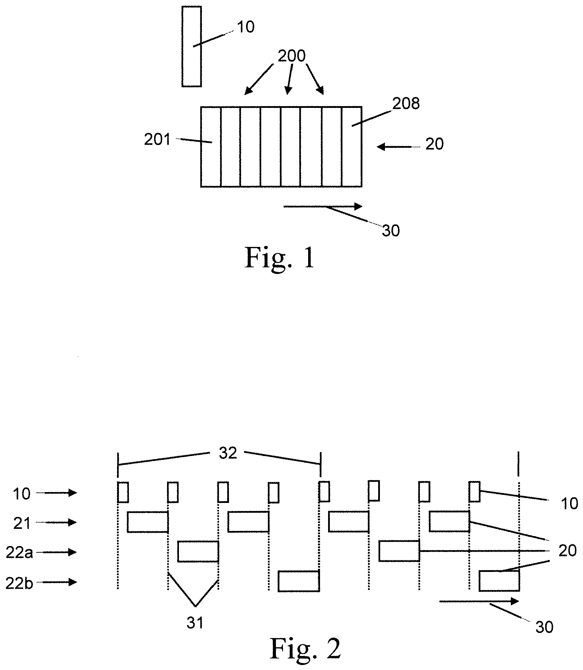

Fig. 1 zeigt ein Zeitdiagramm der Buskommunikation mit der Anfrage des Buskontrollers und den Antworten einer Gruppe von Busknoten.

Der Bus besteht aus einem Buskontroller, der über eine Busverbindung mit Busknoten verbunden ist. Die Busknoten sind jeweils mit mehreren Sensoren verbunden, erhalten deren Sensordaten und können diese Sensordaten über die Busverbindung an den Buskontroller weiterleiten. Der Buskontroller ist mit der Aufzugsteuerung verbunden und kann die Sensordaten an die Aufzugssteuerung weiterleiten.

Im Aufzug sind 50 Busknoten verteilt. Die Busknoten haben unterschiedliche Adressen. Jeder Busknoten ist mit 8 Sensoren verbunden.

10 Busknoten sind an der Kabine, in der Grube und/oder in der Nähe der Aufzugsteuerung angeordnet und dort mit ihren zugeordneten Sensoren verbunden. Die Daten dieser 80 Sensoren sind mindestens teilweise besonders sicherheitsrelevant oder besonders dringlich und müssen besonders ausgewertet werden. Diese 10 Busknoten sind somit vorrangige Busknoten. Diese Busknoten bilden eine Gruppe von aufeinanderfolgenden Adressen.

40 Busknoten sind im Aufzugsschacht angeordnet und dort vor allem mit Türsensoren verbunden. Die Daten dieser 320 Sensoren sind weniger sicherheitsrelevant oder dringlich und müssen daher weniger oft and die Aufzugsteuerung gesendet werden. Diese 40 Busknoten sind somit nachrangige Busknoten. Die 40 Busknoten bilden 4 Gruppen zu 10 Busknoten mit jeweils aufeinanderfolgenden Adressen.

Der Buskontroller sendet Anfragen 10 über die Busverbindung an alle Busknoten und teilt dabei die Adressen einer bestimmten Gruppe mit, d.h. er adressiert eine bestimmte Gruppe. Die Busknoten erkennen, ob sie der Gruppe der mitgeteilten Adressen dieser Anfrage angehören. Nur die Busknoten der betroffenen Gruppe senden unmittelbar nach der Anfrage eine Antwort 20 mit den Sensordaten der ihnen angeschlossenen Sensoren. Dabei senden die Busknoten der zugehörigen Gruppe ihre Antworten 200 im Zeitablauf 30 jeweils nacheinander in der Reihenfolge ihrer Adressen 201, ... 209 über die Busverbindung an den Buskontroller. Über die Reihenfolge der Antworten kann der Buskontroller die Busknoten identifizieren, falls diese Ihre Adresse nicht mit übermitteln sollten und so die Sensordaten zuordnen.

Durch dieses Vorgehen ist nicht für jeden Busknoten eine Anfrage nötig und nicht nötigen Anfragen beschleunigt das Verfahren.

Fig. 2 zeigt ein Zeitdiagramm der Buskommunikation gemäss Figur 1 mit 3 Gruppen von Busknoten.

Im Zeitverlauf 30 sendet der Buskontroller die Anfragen 10 periodisch im Zeitabstand der Anfrageintervalle 31.

Dabei adressiert der Buskontroller bei seinen Anfragen bei jedem 2ten Abfrageintervall eine Gruppe von vorrangigen Busknoten 21. Die Busknoten dieser vorrangigen Gruppe senden ihre Antworten 21 unmittelbar nach der Anfrage innerhalb des Abfrageintervalls. Die Antworten dieser vorrangigen Busknoten 21 erfolgen also im zeitlichen Abstand einer Periodendauer von zwei Abfrageintervallen.

In den dazwischen liegenden Abfrageintervallen adressiert der Buskontroller bei seinen Anfragen abwechselnd eine zweite und eine dritte Gruppe von nachrangigen Busknoten. Diese senden ihre Antworten jeweils unmittelbar nach der sie betreffenden Anfrage innerhalb des Abfrageintervalls, sodass die Antworten dieser beiden nachrangigen Gruppen 22a, 22b im gegenseitigen Wechsel und jeweils alle im zeitlichen Abstand einer Periodendauer von vier Abfrageintervalle erfolgen.

In de Figur sind zwei Wiederholungsintervalle 32 dargestellt. In einem Wiederholungsintervall sind jeweils alle Gruppen von Busknoten, d.h. alle Busknoten und somit alle Sensoren mindestens einmal abgefragt.

Somit zeigt die Ausführung gemäss Figur 2 eine Gruppe von vorrangigen Busknoten und 2 Gruppen von nachrangigen Busknoten. Die vorrangigen Busknoten werden doppelt so oft abgefragt und liefern doppelt so oft die Sensordaten ihrer zugeordneten Sensoren an den Buskontroller und damit an die Aufzugsteuerung wie die nachrangigen Busknoten.

Durch die geringere Abfragefrequenz der nachrangigen Busknoten beschleunigt sich die mögliche Abfragefrequenz der vorrangigen Busknoten im Vergleich zu einer gleichen Abfragefrequenz für alle Busknoten.

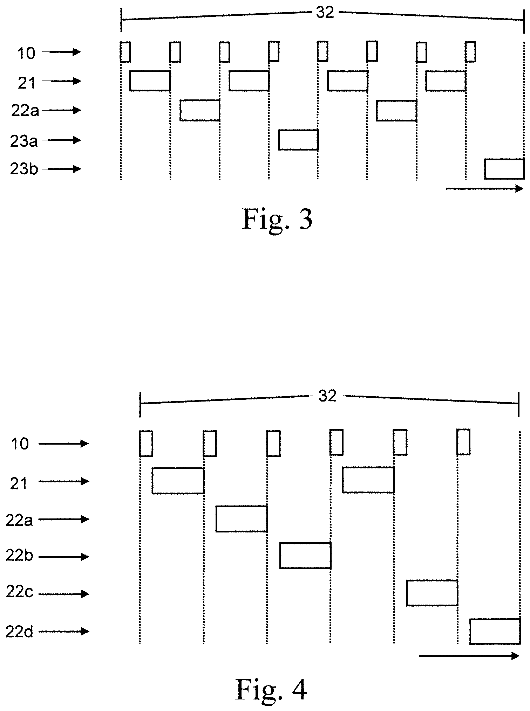

Fig. 3 zeigt ein Zeitdiagramm der Buskommunikation gemäss Figur 1 mit 4 Gruppen von Busknoten.

Es ist ein Wiederholungsintervall 32 dargestellt. Im Zeitverlauf sendet der Buskontroller die Anfragen 10 periodisch im Zeitabstand der Anfrageintervalle.

Dabei adressiert der Buskontroller bei seinen Anfragen bei jedem 2ten Abfrageintervall eine Gruppe von vorrangigen Busknoten 21. Die Busknoten dieser vorrangigen Gruppe senden ihre Antworten 21 unmittelbar nach der Anfrage innerhalb des Abfrageintervalls. Die Antworten dieser vorrangigen Busknoten 21 erfolgen also im zeitlichen Abstand einer Periodendauer von zwei Abfrageintervallen.

In den dazwischen liegenden Abfrageintervallen adressiert der Buskontroller bei seinen Anfragen jeweils eine zweite, dritte und vierte Gruppe von Busknoten.

Die Busknoten der zweiten Gruppe 22a adressiert der Buskontroller bei seinen Anfragen in doppelt so langen Abständen wir die Adressierung der Busknoten der vorrangigen Gruppe, also in jedem 4ten Abfrageintervall. Diese senden ihre Antworten jeweils unmittelbar nach der sie betreffenden Anfrage innerhalb des Abfrageintervalls, sodass die Antworten dieser Gruppe 22a jeweils im zeitlichen Abstand einer Periodendauer von vier Abfrageintervallen erfolgt.

In den nun noch freien Abfrageintervallen adressiert der Buskontroller bei seinen Anfragen die dritte und vierte Gruppe 23a, 23b von Busknoten im Wechsel und somit jeweils in jedem 8ten Abfrageintervall. Diese senden ihre Antworten jeweils unmittelbar nach der sie betreffenden Anfrage innerhalb des Abfrageintervalls, sodass die Antworten dieser beiden nachrangigen Gruppen 23a, 23b im gegenseitigen Wechsel und jeweils im Abstand einer Periodendauer von acht Abfrageintervallen erfolgen.

Somit zeigt die Ausführung gemäss Figur 3 eine Gruppe von vorrangigen Busknoten, eine Gruppe von nachrangigen Busknoten und zwei Gruppen von besonders nachrangigen Busknoten.

Durch die geringere Abfragefrequenz der nachrangigen Busknoten beschleunigt sich die mögliche Abfragefrequenz der vorrangigen Busknoten im Vergleich zu einer gleichen Abfragefrequenz für alle Busknoten.

Zudem ermöglicht diese Ausführung die unterschiedlich häufige Abfrage von 3 verschieden dringlichen Busknoten Typen, d.h. von 3 verschieden dringlichen Sensortypen.

Fig. 4 zeigt ein Zeitdiagramm der Buskommunikation gemäss Figur 1 mit 5 Gruppen von Busknoten.

Es ist ein Wiederholungsintervall 32 dargestellt. Im Zeitverlauf sendet der Buskontroller die Anfragen 10 periodisch im Zeitabstand der Anfrageintervalle.

Dabei adressiert der Buskontroller bei seinen Anfragen bei jedem 3ten Abfrageintervall eine Gruppe von vorrangigen Busknoten 21. Die Busknoten dieser vorrangigen Gruppe senden ihre Antworten 21 unmittelbar nach der Anfrage innerhalb des Abfrageintervalls. Die Antworten 21 dieser vorrangigen Busknoten erfolgen also im zeitlichen Abstand einer Periodendauer von drei Abfrageintervallen.

In den dazwischen liegenden Abfrageintervallen adressiert der Buskontroller bei seinen Abfragen eine zweite, dritte, vierte und fünfte Gruppe von nachrangigen Busknoten. Dabei erfolgt die Adressierung dies Gruppen Busknoten nacheinader. Somit erfolgen die Antworten jede dieser Gruppen 22a, 22b, 22c, 22d jeweils in zeitlichem Abstand einer Periodendauer von sechs Abfrageintervallen.

Somit zeigt die Ausführung gemäss Figur 4 eine Gruppe von vorrangigen Busknoten und vier Gruppen von nachrangigen Busknoten. Die vorrangigen Busknoten senden doppelt so häufig die Daten ihrer zugeordneten Sensoren wie die nachrangigen Busknoten.

Die Gruppe der vorrangigen Busknoten besteht aus 10 Busknoten welche an Kabine, in der Grube und/oder in der Nähe der Aufzugsteuerung angeordnet sind. Jedem dieser vorrangigen Busknoten sind acht Sensoren zugeordnet. Diese insgesamt 80 Sensoren können besonders sicherheitsrelevante Sensoren sein.

Die 4 Gruppen von nachrangigen Busknoten bestehen aus jeweils 10 Busknoten. Diese insgesamt 40 Busknoten sind im Aufzugschacht angeordnet. Jedem dieser 40 vorrangigen Busknoten sind acht Sensoren zugeordnet. Diese insgesamt 320 Sensoren sind im allgemeinen Türsensoren oder andere Sensoren im Aufzug welche weniger sicherheitsrelevant sind.

Durch diese Ausführung kann die Besonderheit des Aufzugsystems aufgegriffen werden, dass der Aufzug unterschiedliche Sensoren mir unterschiedliche Anforderungen an die Dringlichkeit von deren Sensordaten aufweist.

### Bezugszeichenliste:

- 10: Anfrage

- 20: Antworten einer Gruppe von Busknoten
- 21: Antworten einer ersten und vorrangigen Gruppe
- 22a: Antworten einer 2ten und nachrangigen Gruppe 2ter Priorität
- 22b: Antworten einer 3ten und nachrangigen Gruppe 2ter Priorität
- 22c: Antworten einer 4ten und nachrangigen Gruppe 2ter Priorität
- 22d: Antworten einer 5ten und nachrangigen Gruppe 2ter Priorität
- 23a: Antworten einer 3ten und nachrangigen Gruppe 3ter Priorität
- 23b: Antworten einer 4ten und nachrangigen Gruppe 3ter Priorität

- 200: Antworten der einzelnen Busknoten einer Gruppe
- 201: Antwort des ersten Busknoten einer Gruppe
- 208: Antwort des letzten Busknoten einer Gruppe

- 30: Zeitachse
- 31: Request Intervall
- 32: Wiederholungsintervall

## Patentansprüche

1. Kommunikationssystem für einen Aufzug
- mit einem Buskontroller
- welcher periodisch Anfragen an alle Busknoten stellt und
- Antworten Busknoten empfängt,
- mit mehreren Busknoten
- welche Anfragen vom Buskontroller empfangen und
- Antworten an den Busknoten senden,
**dadurch gekennzeichnet, dass**
- der Buskontroller dazu ausgebildet ist
- bei seinen Anfragen jeweils eine Gruppe von Busknoten auszuwählen,
- die Antworten dieser Busknoten zwischen zwei Anfragen abzuwarten.

2. Kommunikationssystem für einen Aufzug nach Anspruch 1, wobei
- der Buskontroller dazu ausgebildet ist
- bei seinen Anfragen unterschiedliche Gruppe von Busknoten auszuwählen
- bis alle Busknoten einmal oder mindesten einmal ausgewählt wurden und
- dieses Vorgehen wiederholt auszuführen.

3. Kommunikationssystem für einen Aufzug nach Anspruch 2, wobei
- der Buskontroller dazu ausgebildet ist
- verschiedene Gruppen von Busknoten jeweils in verschieden langen Zeitabständen auszuwählen,
- wobei insbesondere mindestens eine bestimmte Gruppe von Busknoten in anderem Zeitabstand als andere Gruppen auswählt wird,
- wobei insbesondere die verschiedenen Zeitabstände jeweils ein ganzzahliges Vielfaches des kürzesten Zeitabstandes sind,
- wobei insbesondere mindestens eine bestimmte Gruppe von Busknoten in halb so langen Zeitabständen auswählt wird als andere Gruppen von Busknoten.

4. Kommunikationssystem für einen Aufzug nach Anspruch 3, wobei
- die Busknoten dazu ausgebildet sind, dass
- die verschiedenen Gruppen von Busknoten verschiedenen Typen von Gruppen von Busknoten entsprechen und/oder
- die verschiedenen Typen von Gruppen von Busknoten verschiedenen Typen von Sensoren der den Busknoten zugehörigen Sensoren entsprechen und/oder
- die verschiedenen Typen von Gruppen von Busknoten verschiedenen Typen von Sicherheitsklassen oder Dringlichkeitsklassen der den Busknoten zugehörigen Sensoren entsprechen.

5. Kommunikationssystem für einen Aufzug nach einem der vorhergehenden Ansprüche, wobei
- die Busknoten dazu ausgebildet sind
- nur dann eine Antwort auf die Anfrage des Buskontrollers an den Buskontroller zu senden, wenn der Busknoten in der Gruppe der ausgewählten Busknoten enthalten ist.

6. Kommunikationssystem für einen Aufzug nach einem der vorhergehenden Ansprüche, wobei
- die Busknoten dazu ausgebildet sind
- nur dann eine Antwort auf die Anfrage des Buskontrollers an den Buskontroller zu senden, wenn der Busknoten in der Gruppe der ausgewählten Busknoten enthalten ist und
- nach der Anfrage in bestimmter Reihenfolge zu den ebenfalls in der Gruppe der ausgewählten Busknoten enthaltenen Busknoten seine Antworten an den Buskontroller zu senden.

7. Aufzug mit einem Kommunikationssystem nach einem der vorhergehenden Ansprüche.

8. Buskontroller nach einem der vorhergehenden Ansprüche zur Verwendung in einem Kommunikationssystem nach einem der vorhergehenden Ansprüche.

## Geänderte Patentansprüche

### Geänderte Patentansprüche gemäss Regel 137(2) EPÜ.

1. Kommunikationssystem für einen Aufzug
- mit einem Buskontroller
- welcher periodisch Anfragen an alle Busknoten stellt und
- Antworten Busknoten empfängt,
- mit mehreren Busknoten
- welche Anfragen vom Buskontroller empfangen und
- Antworten an den Busknoten senden,
**dadurch gekennzeichnet, dass**
- der Buskontroller dazu ausgebildet ist
- bei seinen Anfragen jeweils eine Gruppe von Busknoten auszuwählen,
- verschiedene Gruppen von Busknoten jeweils in verschieden langen Zeitabständen auszuwählen
- die Antworten dieser Busknoten zwischen zwei Anfragen abzuwarten.

2. Kommunikationssystem für einen Aufzug nach Anspruch 1, wobei
- der Buskontroller dazu ausgebildet ist
- bei seinen Anfragen unterschiedliche Gruppe von Busknoten auszuwählen
- bis alle Busknoten einmal oder mindesten einmal ausgewählt wurden und
- dieses Vorgehen wiederholt auszuführen.

3. Kommunikationssystem für einen Aufzug nach Anspruch 2, wobei
- der Buskontroller dazu ausgebildet ist
- wobei insbesondere mindestens eine bestimmte Gruppe von Busknoten in anderem Zeitabstand als andere Gruppen auswählt wird,
- wobei insbesondere die verschiedenen Zeitabstände jeweils ein ganzzahliges Vielfaches des kürzesten Zeitabstandes sind,
- wobei insbesondere mindestens eine bestimmte Gruppe von Busknoten in halb so langen Zeitabständen auswählt wird als andere Gruppen von Busknoten.

4. Kommunikationssystem für einen Aufzug nach Anspruch 3, wobei
- die Busknoten dazu ausgebildet sind, dass
- die verschiedenen Gruppen von Busknoten verschiedenen Typen von Gruppen von Busknoten entsprechen und/oder
- die verschiedenen Typen von Gruppen von Busknoten verschiedenen Typen von Sensoren der den Busknoten zugehörigen Sensoren entsprechen und/oder
- die verschiedenen Typen von Gruppen von Busknoten verschiedenen Typen von Sicherheitsklassen oder Dringlichkeitsklassen der den Busknoten zugehörigen Sensoren entsprechen.

5. Kommunikationssystem für einen Aufzug nach einem der vorhergehenden Ansprüche, wobei
- die Busknoten dazu ausgebildet sind
- nur dann eine Antwort auf die Anfrage des Buskontrollers an den Buskontroller zu senden, wenn der Busknoten in der Gruppe der ausgewählten Busknoten enthalten ist.

6. Kommunikationssystem für einen Aufzug nach einem der vorhergehenden Ansprüche, wobei
- die Busknoten dazu ausgebildet sind
- nur dann eine Antwort auf die Anfrage des Buskontrollers an den Buskontroller zu senden, wenn der Busknoten in der Gruppe der ausgewählten Busknoten enthalten ist und
- nach der Anfrage in bestimmter Reihenfolge zu den ebenfalls in der Gruppe der ausgewählten Busknoten enthaltenen Busknoten seine Antworten an den Buskontroller zu senden.

7. Aufzug mit einem Kommunikationssystem nach einem der vorhergehenden Ansprüche.

8. Buskontroller nach einem der vorhergehenden Ansprüche zur Verwendung in einem Kommunikationssystem nach einem der vorhergehenden Ansprüche.
